Europäisches Patentamt

**European Patent Office**

Office européen des brevets

(19)

(11) Publication number: **0 203 729**
**A1**

(12) # EUROPEAN PATENT APPLICATION

(21) Application number: 86303240.5

(22) Date of filing: 29.04.86

(51) Int. Cl.⁴: **F 16 D 55/18**, F 16 D 55/00, F 16 D 65/00, B 60 T 17/22, B 60 T 11/30

(30) Priority: 01.05.85 GB 8511023
27.02.86 GB 8604855

(43) Date of publication of application: 03.12.86
Bulletin 86/49

(84) Designated Contracting States: DE FR GB IT

(71) Applicant: LUCAS INDUSTRIES public limited company, Great King Street, Birmingham, B19 2XF West Midlands (GB)

(72) Inventor: Price, Anthony George, 14 Meadow Lane Croesyceillog, Cwmbran Gwent NP44 2EY. (GB)
Inventor: Campbell, Roy, The Corner House 1Marlbrook Lane, Licky Rock Bromsgrove Worcestershire (GB)

(74) Representative: Spall, Christopher John et al, BARKER, BRETTELL & DUNCAN 138 Hagley Road, Edgbaston Birmingham B16 9PW (GB)

(54) **Improvements in self-energising disc brakes.**

(57) The pressure plates (1, 2) of a self-energising disc of the spreading type are moved angularly in opposite directions to initiate application of the brake by means of a hydraulic actuator (3) of which the axis is tangential to the axis of the brake. The actuator (3) comprises a pair of opposed pistons (8, 9) working in a bore (7) in a cylinder (6) with a compression spring (12) urging the pistons relatively away from each other. A hold-back device (14) is provided to maintain the effective length of the actuator at a predetermined minimum to facilitate installation of the actuator (3) in the brake. The hold back device (14) may comprise a one-piece plastics moulding surrounded by the spring (12) and having a releasable engageable with both pistons (8, 9), or it may comprise a piston-engagement member (31) of resilient material incorporating a claw-like formation (36) and which is radially arranged to embrace complementary beads or ribs (37) at the adjacent ends of the two pistons.

1

## IMPROVEMENTS IN SELF-ENERGISING DISC BRAKES

This invention relates to self-energising disc brakes of the kind in which rotatable friction discs provided with linings of friction material are adapted to be brought into engagement with spaced opposed braking surfaces in a housing by pressure plates located between the friction discs and centred by stationary pilot lugs, balls or rollers are located in co-operating oppositely inclined angularly spaced recesses in the adjacent faces of the pressure plates, and the application of the brake is initiated by moving the pressure plates angularly in opposite directions, the pressure plates then moving apart by a tendency for the balls or rollers to ride up ramps defined by the edges of the recesses so that the pressure plates move into engagement with the friction discs which are urged, in turn, into engagement with the braking surfaces against the force in tension return springs acting between the pressure plates, the pressure plates being carried round with the friction discs until one is arrested by the engagement of a lug on the plate with a drag-taking stop abutment in the housing, and the continued angular movement of the other pressure plate providing a servo action.

Self-energising brakes of the kind set forth may be dry or they may be of the liquid cooled type, and such brakes are commonly used in tractors and like vehicles and are hereinafter called brakes of the kind set forth.

It is known to actuate brakes of the kind set forth hydraulically for normal service braking. In one known construction the pressure plates are moved angularly in opposite directions by means of an hydraulic piston and cylinder assembly of which the main axis is tangential to the axis of the plates.

In order to maintain reasonable fluid demands, the relative positions between the components of the piston and cylinder assembly are urged relatively away from each other by means of a spring in order to follow up relative displacements between the pressure plates caused by periodic manual adjustment for wear of the friction linings. The spring overcomes seal friction and ensures that the effect of vibrational piston "knock-back" is eliminated. The force of the spring is chosen such that it is readily overpowered by the tension return springs to ensure that it has no effect on the running clearances of the brake and yet has sufficient force to respond quickly to any sudden reduction in its working length brought about, for example, by forward to reverse disc rotation when the brake is applied.

In a free state the spring will tend to expand the piston and cylinder assembly making installation of the assembly in the brake difficult, particularly when access into the brake is through an opening in the side of an axle housing of the vehicle.

According to our invention in a disc brake of the kind set forth in which the pressure plates are moved angularly in opposite directions to initiate application of the brake by means of an hydraulic piston and cylinder assembly of which the main axis is tangential to the axis of the pressure plates, and the components of the assembly are normally urged away from each other by means of a spring, a hold-back device is provided releasably to couple the components of the assembly together whereby to maintain the effective

3

length of the assembly at a predetermined value at least during installation of the assembly in the brake.

Preferably the hold-back device has a releasable frictional engagement with at least one of the components, and the strength of the frictional engagement is chosen such that the net effect of the spring force is contained until a low hydraulic pressure is introduced into the assembly.

When the assembly is installed in the brake with the hold-back device operative, the return springs overcome the force in the spring, the seal friction, and other resistance to engagement. When the device is incorporated in the assembly itself, the mass of the device fills a substantial proportion of the volume between the components of the assembly, thereby minimising the quantity of air to be purged from the system during bleeding.

After disengagement of the hold-back device the spring holds the components in contact with actuator lugs on the two pressure plates.

In one construction the hydraulic piston and cylinder assembly comprises a cylinder body having a longitudinal through-bore in which work a pair of opposed pistons for co-operation at their outer ends between the actuator lugs, and the hold-back device comprises a coupling member which is encircled by the spring and at opposite ends is provided with locking means releasably engageable with complementary means in adjacent ends of the pistons.

4

The coupling member may comprise a one-piece moulding of plastics material.

The coupling member may be provided at opposite ends with locking formations releasably engageable with complementary recesses in adjacent ends of the pistons, and the locking formations may be slotted axially to provide a degree of flexibility in order to facilitate disengagement of the formations from the pistons when a pressure space in the bore between adjacent ends of the pistons is pressurised by fluid to separate the pistons whereby to apply the brake.

Alternatively the coupling member may be provided at opposite ends with inwardly directed radial beads releasably engageable with complementary projections at adjacent ends of the pistons.

In another construction the hydraulic piston and cylinder assembly comprises a cylinder body having a longitudinal through-bore in which work a pair of opposed pistons for co-operation at their outer ends between the actuator lugs, and the hold-back device comprises a resilient member which projects through a radial opening in the wall of the cylinder body and into the through-bore for releasable co-operation with complementary radial projections at the adjacent inner ends of both pistons.

Conveniently the projections comprise radial beads or ribs, and the resilient member has a bifurcated inner end portion or claw which engages with the two projections to hold the inner ends of the pistons together.

5

The resilient member may comprise a part of a throw-away transit plug, or it may be operated in conjunction with a bleed screw. When the resilient member is operated in conjunction with the bleed screw, partial opening of the bleed screw will enable low-pressure bleeding to be performed without the release of the pistons, thereby minimising the volume to be bled. At higher pressures the releasable co-operation will be overcome and the dynamic piston will be released. For servicing, full release of the bleed screw will allow the brake return springs to collapse the piston and cylinder assembly fully and subsequent re-tightening of the bleed screw will once again cause the resilient member to re-engage the pistons, holding them together for easy withdrawal of the actuator assembly from the brake. A new resilient member may be provided in the brake service kit if necessary.

Some embodiments of our invention are illustrated in the accompanying drawings in which:-

Figure 1 is a longitudinal section through an hydraulic actuator including portions of the pressure plates of a brake of the kind set forth;

Figure 2 is a section on an enlarged scale of one end of the hold-back device;

Figure 3 is a section similar to Figure 2 but showing the hold-back device in another position;

Figure 4 is a view similar to Figure 1 but showing a modification;

Figure 5 is a view similar to Figure 1 but showing another construction; and

6

Figure 6 is a view similar to Figure 5 but showing a modification.

A brake of the spreading type comprises a pair of rotatable friction discs provided on opposite sides with linings of friction material which are adapted to be brought into engagement with spaced opposed radial surfaces in a housing by pressure plates 1, 2 located between the discs and centred by three angularly spaced stationary pilots and urged towards each other by tension return springs coupled to the plates at opposite ends. Balls or rollers are located in co-operating oppositely inclined recesses in the opposite faces of the pressure plates which are adjacent in the brake.

The application of the brake is initiated by moving the pressure plates 1, 2 angularly in opposite directions which causes the pressure plates to move axially relatively away from each other due to the tendency for the balls or rollers to ride up ramps defined by the end faces of the recesses. This urges the friction discs into engagement with the faces in the housing. The pressure plates are then carried round with the discs until one is arrested by the engagement of a lug on a respective plate with a drag-taking abutment, as will hereinafter be described, whereafter continued angular movement of the other plate provides a servo action.

The brake is applied mechanically for parking or in an emergency by a pull-rod (not shown) which extends through a radial opening in the housing and is coupled to the outer ends of a pair of toggle links of which the inner ends are pivotally connected to respective pressure plates.

For normal service braking the brake is applied hydraulically by an hydraulic actuator 3 which acts betweeen lugs 4, 5 on the respective pressure plates. The lugs 4, 5 are displaced angularly from the toggle links.

The hydraulic actuator 3 comprises a cylinder 6 which is carried from the housing of the brake and has a longitudinally extending open-ended bore 7 in which work a pair of opposed pistons 8, 9 each provided with a seal 10 adjacent to its inner end. A compression spring 12 received at opposite ends in opposed recesses 13 of stepped outline in adjacent ends of the pistons 8, 9 acts to urge the pistons 8, 9 relatively away from each other.

A piston hold-back device 14 is incorporated in the actuator 3. As illustrated the device 14 comprises a cylindrical component 15 in the form of a one-piece moulding of plastics material provided at opposite ends with integral formations 16, 17 of reduced diameters. The component 15 is encircled by the spring 12 and therefore occupies substantially the whole of the volume defined by the two recesses 13, and each formation 16, 17 is provided with a plurality of axially extending slots 18 to provide each formation 16, 17 with a degree of flexibility.

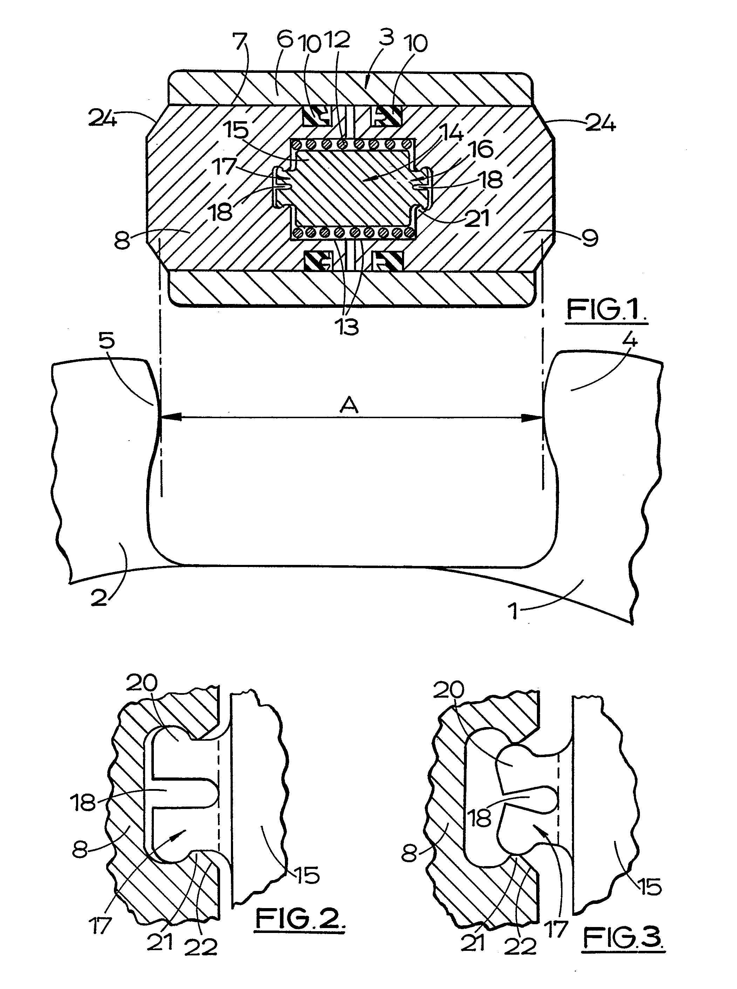

Each formation includes a radial bead or thickening 20 which has a push-in and snap detachable frictional engagement behind a shoulder 21 at the step at the change in diameter in each recess 13, as shown in Figures 1 and 2, to couple the pistons 8 and 9

8

together against the force in the spring 12. The engagement of the bead 20 behind the shoulder 21 is facilitated by the provision of a chamfer 22 on the face of the shoulder 21 adjacent to the portion of the recess 13 which is of greater diameter.

The outer ends of the pistons 8 and 9 are chamfered at 24 to facilitate insertion of the actuator 3 between the lugs 4 and 5.

As illustrated in Figure 1 the actuator 3 is inserted between the lugs 4 and 5 which are spaced apart by a chordal length 'A' which is smaller than the effective length of the actuator 3. The pistons 8 and 9 are therefore urged inwardly against the force in the spring 12 with the formations 17 moving towards the closed ends of the recesses 13, due to the force in the return springs for the pressure plates overcoming the force in the spring 12, and the friction in the seals 10.

After adjustment of the braking clearance by the use of a mechanical adjuster associated with the mechanical brake-applying means, the chordal length is increased as shown in Figure 2, with the bead 20 in engagement with the shoulder 21.

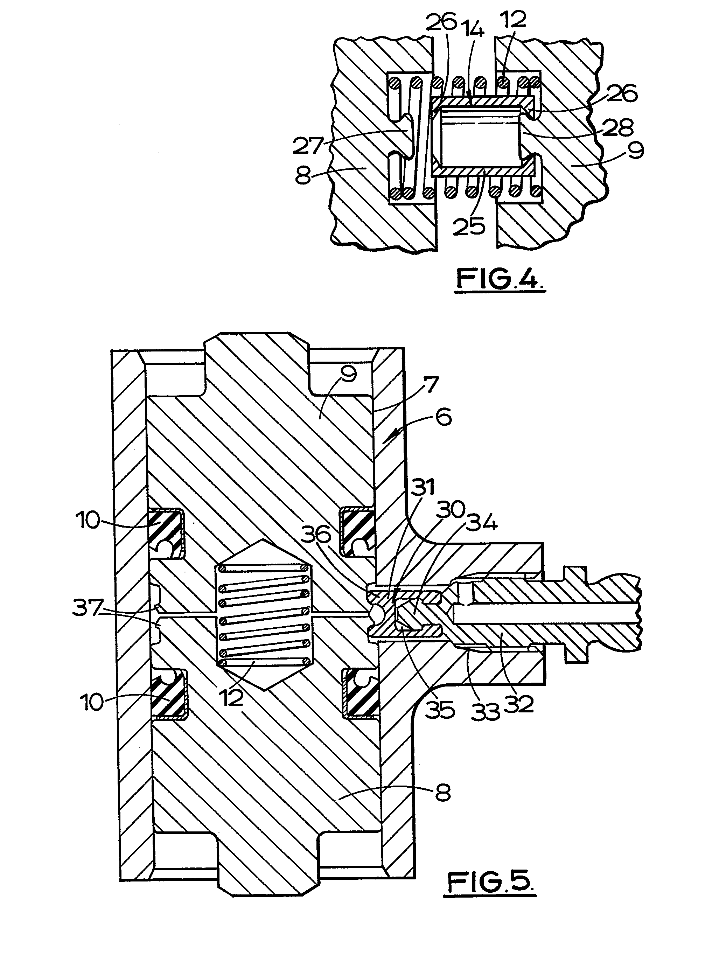

When the brake is applied hydraulically by the admission of hydraulic fluid into a pressure space in the bore 7 between adjacent ends of the pistons 8, 9 the pistons 8, 9 are urged apart with the beads 20 releasing from the shoulders 21, and the spacing between the lugs 4, 5 increases as shown in Figure 3.

To facilitate removal of the actuator from the brake, operation of the mechanical adjuster will urge the pistons 8, 9 inwardly towards each other to re-engage the beads 20 behind the shoulders 21.

In the modified construction illustrated in Figure 4 of the accompanying drawings the hold-back device 14 comprises a cylindrical tubular component 25 provided at opposite ends with inwardly directed radial beads 26. Each bead 26 has a push-over and snap engagement with a complementary projection 27, 28 at the adjacent end of a respective one of the two pistons 27, 28.

The construction and operation of the embodiment of Figure 4 is otherwise the same as that of Figures 1-3, and corresponding reference numerals have been applied to corresponding parts.

In the embodiment of Figure 5 the hold-back device 14 is omitted from between the two pistons 8 and 9, and is replaced with a hold-back device 30 comprising a piston-engagement member 31 of resilient material. A bleed screw 32 is screwed into a radial bore 33 in the wall of the cylinder 6 and at its inner end is provided with a nose 34 captive in a complementary recess 35 in the adjacent end of the member 31.

The resilient member 31 is provided at its inner end with a claw-like formation 36 which embraces complementary beads or ribs 37 at the adjacent inner ends of the two pistons 8, 9 to hold the two pistons together against the force in the spring 12, substantially with the two ends in contact.

Partial opening of the bleed screw 32 enables low-pressure bleeding to be carried out without the release of the pistons. At higher pressure the locking engagement of the resilient member will be overcome and the pistons 8 and 9 will be released.

For servicing, full release of the bleed screw 32 will allow the return springs of the brake to urge the pistons 8 and 9 towards each other against the load in the spring 12, and subsequent re-tightening of the bleed screw will once again cause the resilient member 31 to re-engage the pistons 8 and 9, holding them together. This facilitates withdrawal of the hydraulic actuator from the brake.

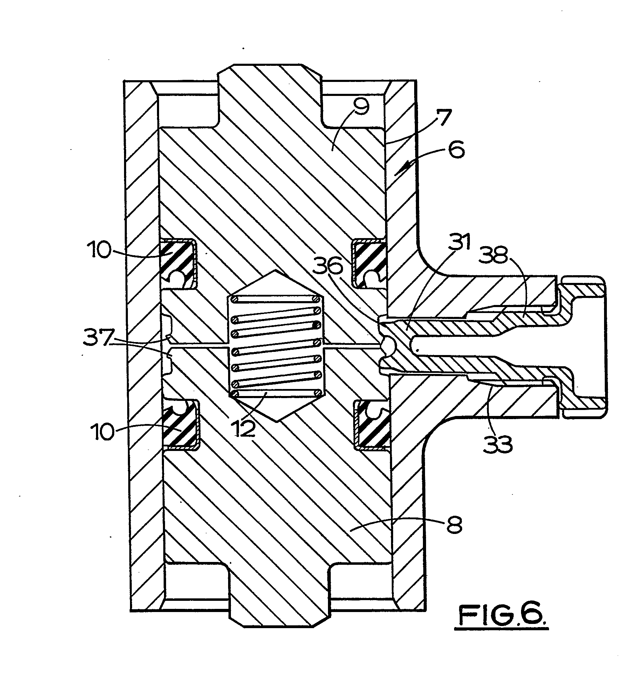

In the modified construction shown in Figure 6 the resilient piston-engagement member 31 comprises a part of a unitary transit plug 38 which is screwed into the radial bore 33. The plug 38 comprises a throw-away member which is used only for packaging, transit, and installation purposes. For servicing a similar component may be employed. After removal, the transit plug 38 can be replaced by a bleed screw, similar to the bleed screw 32.

11

## CLAIMS

1.  A self-energising disc brake in which rotatable friction discs provided with linings of friction material are adapted to be brought into engagement with spaced opposed braking surfaces in a housing by pressure plates (1, 2) located between the friction discs and centred by stationary pilot lugs, balls or rollers are located in co-operating oppositely inclined angularly spaced recesses in the adjacent faces of the pressure plates, and the application of the brake is initiated by moving the pressure plates angularly in opposite directions, the pressure plates then moving apart by a tendency for the balls or rollers to ride up ramps defined by the edges of the recesses so that the pressure plates move into engagement with the friction discs which are urged, in turn, into engagement with the braking surfaces against the force in tension return springs acting between the pressure plates, the pressure plates being carried round with the friction discs until one is arrested by the engagement of a lug on the plate with a drag-taking stop abutment in the housing, and the continued angular movement of the other pressure plate providing a servo action, and in which the pressure plates are moved angularly in opposite directions to initiate application of the brake by means of an hydraulic piston and cylinder assembly (3) of which the main axis is tangential to the axis of the pressure plates, and the components (8, 9) of the assembly are normally urged away from each other by means of a spring (12), characterised in that a hold-back device (14) is provided releasably to couple the components of the assembly together whereby to maintain the effective length of the assembly at a predetermined value at least during installation of the assembly in the brake.

2. A brake according to claim 1, characterised in that the hold-back device (14) has a releasable frictional engagement with at least one of the components (8, 9) and the strength of the frictional engagement is chosen such that the net effect of the spring force is contained until a low hydraulic pressure is introduced into the assembly.

3. A brake according to claim 1 or claim 2, characterised in that the hydraulic piston and cylinder assembly (3) comprises a cylinder body (6) having a longitudinal through-bore in which work a pair of opposed pistons (8, 9) for co-operation at their outer ends between the actuator lugs (4, 5), and the hold-back device (14) comprises a coupling member (15) which is encircled by the spring (12) and at opposite ends is provided with locking means (16, 17, 26) engageable with complementary means (21, 27, 28) in adjacent ends of the pistons (8, 9).

4. A brake according to claim 3, characterised with the coupling member (15) comprises a one-piece moulding of plastics material.

5. A brake according to claim 3 or claim 4, characterised in that the coupling member (15) is provided at opposite ends with locking formations (16, 17) releasably engageable with complementary recesses (21) in adjacent ends of the pistons (8, 9).

6. A brake according to claim 5, characterised in that the locking formations (16, 17) are slotted axially (at 18) to provide a degree of flexibility in order to facilitate disengagement of the formations from the pistons (8, 9) when a pressure space in the bore between adjacent ends of the pistons is pressurised by fluid to separate the pistons whereby to apply the brake.

7. A brake according to claim 3 or claim 4, characterised in that the coupling member (15) is provided at opposite ends with inwardly directed radial beads (26) releasably engageable with complementary projections (27, 28) at adjacent ends of the pistons (8, 9).

8. A brake according to claim 1 or claim 2, characterised in that the hydraulic piston and cylinder assembly comprises a cylinder body (6) having a longitudinal through-bore (7) in which works a pair of opposed pistons (8, 9) for co-operation at their outer ends between the actuator lugs (4, 5), and the hold-back device (14) comprises a resilient member (31) which projects through a radial opening (33) in the wall of the cylinder body and into the through-bore for releasable co-operation with complementary radial projections at the adjacent inner ends of both pistons (8, 9).

9. A brake according to claim 8, characterised in that the projections comprises radial beads or ribs (37), and the resilient member (31) has a bifurcated inner end portion or claw (36) which engages with the two projections to hold the inner ends of the pistons (8, 9) together.

10. A brake according to claim 9, characterised in that the resilient member (31) comprises a part of a throw-away transit plug (38).

14

11. A brake according to claim 9, characterised in that the resilient member 31 is operated in conjunction with a bleed screw 32 which has a screw-threaded engagement in the radial opening (33).

FIG.1.

FIG.2.

FIG.3.

0203729

2/3

FIG.4.

FIG.5.

0203729

FIG.6.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 757 760 (FINKENAUER) <br> * Whole document; figures 1-6 * | 1 | F 16 D 55/18 <br> F 16 D 55/00 <br> F 16 D 65/00 <br> B 60 T 17/22 <br> B 60 T 11/30 |
| A | FR-A-2 217 595 (GIRLING LTD.) <br> * Whole document; figures 1-3 * | 1 | |
| A | US-A-2 733 780 (MYERS) | | |
| A | FR-E- 86 271 (SOCIETE ANONYME FRANCAISE DU FERODO) | | |
| A | FR-A-1 189 693 (HERMANN KLAUE) | | |
| A,P | EP-A-0 139 518 (LUCAS INDUSTRIES PUBLIC LTD. CO.) | | |
| A | EP-A-0 033 032 (LUCAS INDUSTRIES LTD.) | | |

**TECHNICAL FIELDS SEARCHED (Int. Cl.4)**

F 16 D 55/00
F 16 D 65/00
B 60 T 17/00
B 60 T 11/00

The present search report has been drawn up for all claims

| Place of search | Date of completion of the search | Examiner |
|---|---|---|
| THE HAGUE | 08-08-1986 | BRAEMS C.G.I. |